# EUROPEAN PATENT APPLICATION

(11) **EP 3 070 989 A1**
(43) Date of publication of application: **21.09.2016**
(21) Application number: 14862676.5
(22) Date of filing: 22.07.2014
(51) Int. Cl.: H04W 72/08

(54) **METHOD, SYSTEM AND APPARATUS FOR CONTROL CHANNEL INTERFERENCE COORDINATION, AND BASE STATIONS**

(30) Priority: 13.11.2013 CN 201310572362
(71) Applicant: ZTE Corporation, Guangdong 518057 (CN)
(72) Inventor: ZHANG, Zhengquan, Shenzhen Guangdong 518057 (CN)
(74) Representative: Potter Clarkson LLP
(86) International application number: PCT/CN2014/082716
(87) International publication number: WO 2015/070636

(57) **Abstract**

Disclosed are a method, a system and an apparatus for control channel interference coordination, and base stations. The method comprises: an invaded cell base station measuring information about an invaded user and reporting the information about the invaded user to an invading cell base station; the invading cell base station determining, according to the received information about the invaded user, physical resource information for control channel, and transmitting the physical resource information to the invaded cell base station; and the invading cell base station and invaded cell base station separately organizing and allocating a physical resource for a user terminal according to the physical resource information.

## Description

### TECHNICAL FIELD

The disclosure relates to field of interference coordination in communication system, in particularly, to a method, a system and an apparatus for interference coordination of control channel as well as base stations in HetNet (Heterogeneous Network) of LTE (Long Term Evolution) communication system.

### BACKGROUND

HetNet refers to a heterogeneous network formed by LPNs (Low Power Nodes) of different node types sharing a same coverage which are provided within a coverage area of a macro BS (base station). Signal coverage can be improved by HetNet, such that system capacity may be increased greatly. However, transmission power of the macro BS is relatively larger than that of the LPN, so interference may be caused to downlink reception of boundary UE (User Equipment) in the LPN from the macro BS and caused to adjacent LPN from large-power UE at boundary of the macro BS. Herein, the macro BS causing the interference may be referred to as an invading cell BS, while the LPN being interfered may be referred to as an invaded cell BS. In order to solve the inter-cell interference in the HetNet, time-domain inter-cell interference coordination technology has been developed. The time-domain inter-cell interference coordination technology is implemented by enabling the invading cell BS and the invaded cell BS to be scheduled on difference subframes through introduction of ABS (Almost Blank Subframe), such that the interference between the invading cell BS and the invaded cell BS can be reduced. However, utilization of physical resource may be dropped if physical resource of the ABS only is utilized by the invaded cell BS, and thus control information cannot be transmitted via non-ABS, such that user experience may be affected. If the invaded cell BS is enabled to utilize physical resource of the non-ABS by controlling power of control channel on the non-ABS, although resource utilization of the control channel can be improved for the invaded cell BS, transmission of control information via control channel of the invading cell BS may be affected. Moreover, such power control is relatively complicated, and it is difficult to ensure precision of the control.

### SUMMARY

In view of defects as described in the background, there are provided a method, a system and an apparatus for interference coordination of control channel as well as base stations.

A method for interference coordination of control channel according to an embodiment of the disclosure includes: receiving invaded UE information; determining physical resource information used for control channel according to the invaded UE information; organizing and allocating physical resource based on the physical resource information; and transferring the physical resource information.

In an embodiment, the method further includes: transmitting a reporting manner of the invaded UE information and types of the invaded UE information to be reported.

In an embodiment, the determining physical resource information used for control channel according to the invaded UE information includes: determining the physical resource information used for control channel according to the invaded UE information when it is decided a reallocation of physical resource is required.

In an embodiment, the decision that reallocation of physical resource is required is made by:
obtaining the number of UEs accommodated by current physical resource allocated for invaded UEs through a calculation based on an amount of physical resource allocated for invaded UEs and the number of UEs accommodated by unit physical resource;
deciding the reallocation of physical resource is required when the number of invaded UEs meets any one condition selected from a group including:
   the number of invaded UEs reaches a preset percentage of the number of UEs accommodated by current physical resource allocated for invaded UEs;
   the number of invaded UEs equals to the number of UEs accommodated by current physical resource allocated for invaded UEs; and
   the number of invaded UEs exceeds the number of UEs accommodated by current physical resource allocated for invaded UEs.

In an embodiment, the transmitting a reporting manner of the invaded UE information and types of the invaded UE information to be reported is performed by transmitting a resource status request message.

In an embodiment, the physical resource information used for control channel includes an initial position of resource blocks and the number of the resource blocks.

In an embodiment, the physical resource information used for control channel is transferred by transmitting a load information message.

In an embodiment, the organizing and allocating physical resource based on the physical resource information includes:
organizing a physical resource pool based on the physical resource information; and
recovering allocated physical resource, when the allocated physical resource is not present in the physical resource pool, and reallocating the physical resource according to the physical resource pool.

Accordingly, there is also provided another method for interference coordination of control channel by embodiments of the disclosure, including: measuring and reporting invaded UE information; receiving physical resource information used for control channel; and organizing and allocating physical resource based on the physical resource information.

In an embodiment, the method further includes: receiving a reporting manner of the invaded UE information and types of the invaded UE information to be reported; determining whether the reporting manner of the invaded UE information and the types of the invaded UE information to be reported are proper based on current interference, if yes, replying with a resource status response message and, if no, replying with a resource status failure message.

In an embodiment, the organizing and allocating physical resource based on the physical resource information includes:
organizing a physical resource pool based on the physical resource information; and
recovering allocated physical resource, when the allocated physical resource is not present in the physical resource pool, and reallocating the physical resource according to the physical resource pool.

There is also provided yet another method for interference coordination of control channel by embodiments of the disclosure, including: measuring, by an invaded cell BS, invaded UE information and reporting the invaded UE information to an invading cell BS; determining, by the invading cell BS, physical resource information used for control channel according to the invaded UE information, and transferring the physical resource information to the invaded cell BS; and organizing and allocating, by the invading cell BS and the invaded cell BS, respectively, physical resource based on the physical resource information.

In an embodiment, the method further includes: determining a reporting manner of the invaded UE information and types of the invaded UE information to be reported through a negotiation between the invading cell BS and the invaded cell BS.

There is further provided a system for interference coordination of control channel by embodiments of the disclosure, including: an invaded cell BS and an invading cell BS; the invaded cell BS is configured to measure invaded UE information, report the invaded UE information to the invading cell BS, receive physical resource information used for control channel transferred by the invading cell BS, and organize and allocate physical resource based on the physical resource information; the invading cell BS is configured to receive the invaded UE information reported by the invaded cell BS, determine the physical resource information used for control channel according to the received invaded UE information, organize and allocate physical resource based on the physical resource information, and transfer the physical resource information to the invaded cell BS.

In an embodiment, the invading cell BS is further configured to determine whether a reallocation of physical resource is required based on the received invaded UE information.

There is also provided an apparatus for interference coordination of control channel by embodiments of the disclosure, including: a receiving module configured to receive invaded UE information; a reconfiguration module configured to determine physical resource information used for control channel, and organize and allocate physical resource based on the physical resource information; and a transferring module configured to transfer the physical resource information.

In an embodiment, the apparatus further includes a determining module configured to determine whether a reallocation of physical resource is required based on the received invaded UE information.

There is also provided an apparatus for interference coordination of control channel by embodiments of the disclosure, including: a measuring module configured to measure invaded UE information; a reporting module configured to report the invaded UE information; a receiving module configured to receive physical resource information used for control channel; and a reconfiguration module configured to organize and allocate physical resource based on the physical resource information.

In an embodiment, the receiving module is further configured to receive a reporting manner of the invaded UE information and types of the invaded UE information to be reported; and the apparatus further includes a determining module configured to determine whether the reporting manner of the invaded UE information and the types of the invaded UE information to be reported as received are proper based on current interference, if yes, reply with a resource status response message and, if no, reply with a resource status failure message.

There is further provided a base station according to embodiments of the disclosure, including any one of apparatuses for interference coordination of control channel as described above.

There is further provided a computer readable storage medium according to embodiments of the disclosure, including a set of computer executable instructions configured to perform the method for interference coordination of control channel at a side of the invaded cell BS according to the embodiment of the disclosure.

There is further provided a computer readable storage medium according to embodiments of the disclosure, including a set of computer executable instructions configured to perform the method for interference coordination of control channel at a side of the invading cell BS according to the embodiment of the disclosure.

According to the method, system and apparatus for interference coordination of control channel as well as the base station provided by embodiments of the disclosure, the physical resource organized for the invaded UEs by the invaded cell BS is different from the invading cell BS, such that the resource of control channel utilized by interfered UEs is completely orthogonalized between the invading cell BS and the invaded cell BS. In this way, the interference can be reduced without affecting transmission of control information, and system performance as well as user experience can be improved.

### BRIEF DESCRIPTION OF THE DRAWINGS

Fig. 1 is a flow chart illustrating basic steps of a method for interference coordination of control channel according to an embodiment of the disclosure.
Fig. 2 is a flow chart according to a first embodiment of the disclosure.
Fig. 3 is a flow chart according to a second embodiment of the disclosure.
Fig. 4 is a flow chart illustrating a negotiation process between an invading cell BS and an invaded cell BS.
Fig. 5 is a flow chart illustrating a decision process of an invading cell BS for reallocating physical resource.
Fig. 6 is a flow chart illustrating organization and allocation of physical resource in an invading cell BS and an invaded cell BS.
Fig. 7 is a block diagram illustrating a system and an apparatus for interference coordination of control channel according to an embodiment of the disclosure.

### DETAILED DESCRIPTION

Basic concept of embodiments of the disclosure may be described as follow. Invaded user equipment (UE) information may be measured and reported to an invading cell base station (BS) by an invaded cell BS. Physical resource information may be then determined by the invading cell BS based on the received invaded UE information and transferred to the invaded cell BS. Physical resource can be thus organized and allocated to UEs according to the physical resource information at the invading cell BS and the invaded cell BS, respectively. In an embodiment, the invaded UE information measured by the invaded cell BS may include at least the number of invaded UEs. Moreover, the invaded UE information may be reported periodically or reported when a certain condition is satisfied. When the invaded UE information is reported periodically by the invaded cell BS, it may be determined by the invading cell BS, according to the received invaded UE information, whether a reallocation of physical resource is required.

In order to clarify technical problem to be solved by the disclosure, and technical solution and advantages thereof, detailed description will be given hereinbelow with reference to the drawings and embodiments.

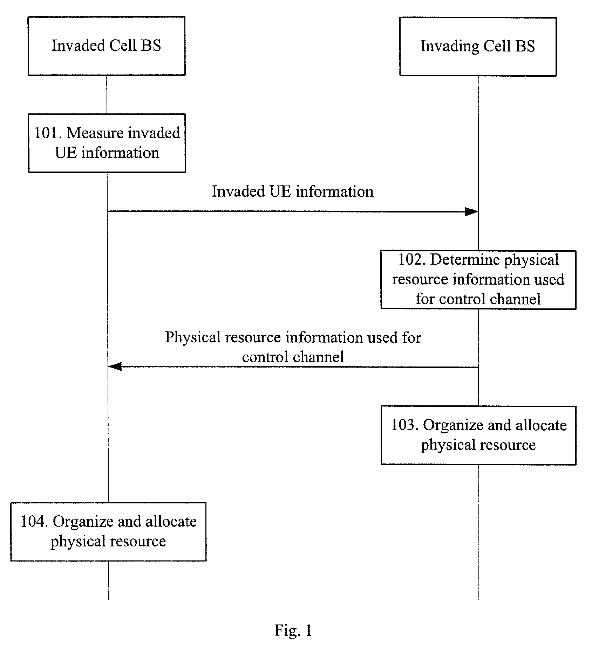

Fig. 1 is a flow chart illustrating basic steps of a method for interference coordination of control channel according to an embodiment of the disclosure. As can be seen, the method includes following steps.

In step 101, invaded UE information is measured and reported to an invading cell BS by an invaded cell BS.

In step 102, physical resource information used for control channel is determined by the invading cell BS according to the invaded UE information, and the physical resource information is then transferred to the invaded cell BS.

In step 103, physical resource is organized and allocated by the invading cell BS based on the physical resource information.

In step 104, physical resource is organized by the invaded cell BS based on the received physical resource information, and is then allocated to UEs.

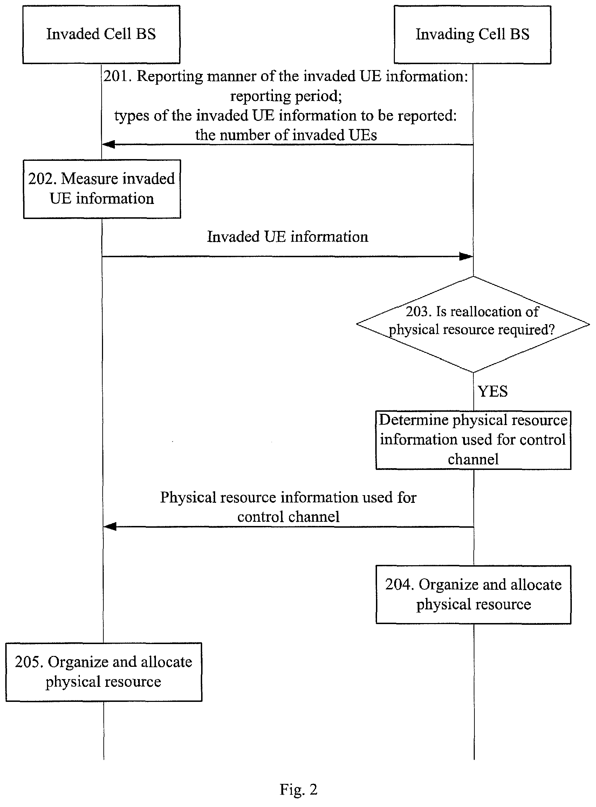

Fig. 2 illustrates a first embodiment of the disclosure. The method for interference coordination of control channel according to the embodiment includes following steps.

In step 201, a reporting manner of the invaded UE information and types of the invaded UE information to be reported is determined through a negotiation between the invading cell BS and the invaded cell BS.

The reporting manner of the invaded UE information may include a reporting period. The types of the invaded UE information to be reported may include at least the number of invaded UEs.

In step 202, the invaded UE information is measured by the invaded cell BS and then, is reported to the invading cell BS according to the reporting period.

The invaded UE information may be carried in a resource status update message. In other words, the invaded UE information can be reported from the invaded cell BS to the invading cell BS via transmission of the resource status update message.

In step 203, it is determined by the invading cell BS, according to the received invaded UE information, whether a reallocation of physical resource is required. If yes, physical resource information used for control channel is determined and transferred to the invaded cell BS.

If it is determined that the reallocation of physical resource is not required, the method returns to step 202, where the invaded UE information is continually measured by the invaded cell BS and reported to the invading cell BS according to the reporting period.

In step 204, physical resource is organized by the invading cell BS based on the physical resource information and reallocated among UEs which have been accessed in the invading cell.

In step 205, physical resource is organized by the invaded cell BS based on the received physical resource information and reallocated among UEs which have been accessed in the invaded cell.

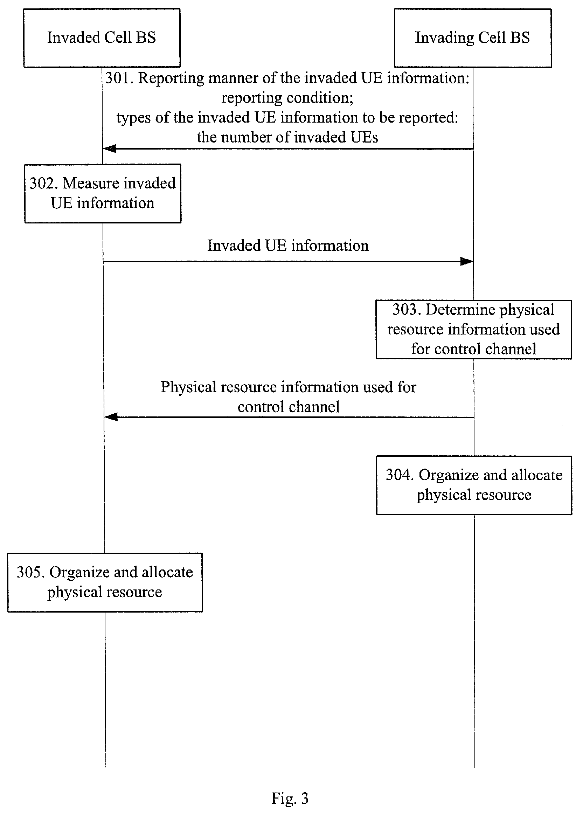

Fig. 3 illustrates a second embodiment of the disclosure. The method for interference coordination of control channel according to the embodiment includes following steps.

In step 301, a reporting manner of the invaded UE information and types of the invaded UE information to be reported is determined through a negotiation between the invading cell BS and the invaded cell BS.

The reporting manner of the invaded UE information may include a reporting condition. The types of the invaded UE information to be reported may include at least the number of invaded UEs.

In step 302, the invaded UE information is measured by the invaded cell BS and then, is reported to the invading cell BS when the reporting condition is satisfied.

In step 303, physical resource information used for control channel is determined, according to the received invaded UE information, by the invading cell BS and then, is transferred to the invaded cell BS.

In step 304, physical resource is organized by the invading cell BS based on the physical resource information and reallocated among UEs which have been accessed in the invading cell.

In step 305, physical resource is organized by the invaded cell BS based on the received physical resource information and reallocated among UEs which have been accessed in the invaded cell.

The physical resource information used for control channel may be determined through follow steps. Physical resource allocated for invaded UEs may be firstly obtained through a calculation in which an amount of the resource equals to the number of invaded UEs divided by the number of UEs accommodated by unit physical resource before being rounded up, that is, "the amount of the resource"= ┌ "the number of invaded UEs" / "the number of UEs accommodated by unit physical resource" ┐. Then the physical resource information can be determined based on the calculated amount of the resource. Moreover, the physical resource information used for control channel may include an initial position of resource blocks and the number of the resource blocks.

The physical resource information used for control channel described above may be transferred through transmission of a load information message from the invading cell BS to the invaded cell BS. In other words, the information on adjusted physical resource may be carried in the load information message which is used for transferring information on load and interference coordination from a BS to its adjacent BS.

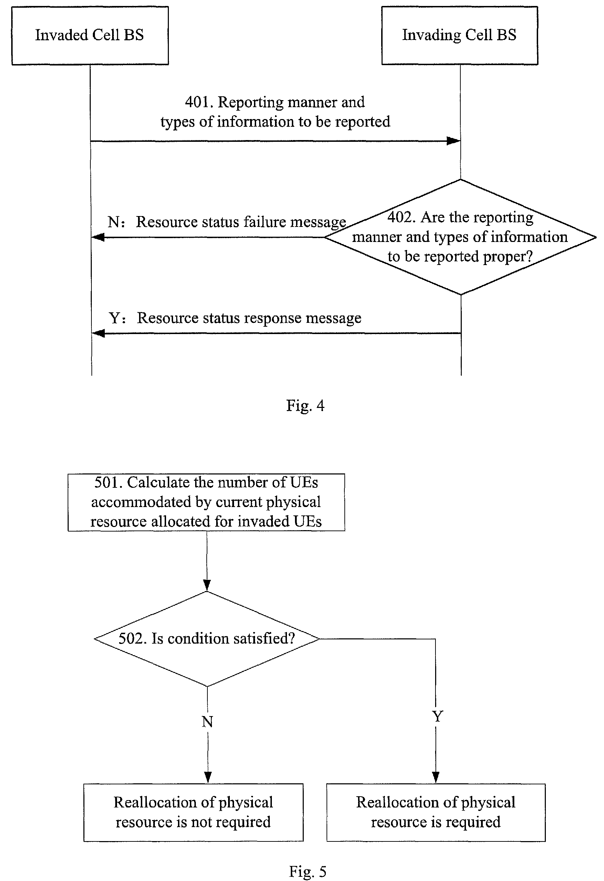

Fig. 4 is a flow chart illustrating a negotiation process between an invading cell BS and an invaded cell BS. The negotiation process between the invading cell BS and the invaded cell BS for determining the reporting manner of the invaded UE information and the types of invaded UE information to be reported, as shown, includes following steps.

In step 401, the manner for reporting the invaded UE information from the invaded cell BS and the types of invaded UE information to be reported are transmitted by the invading cell BS.

The manner for reporting the invaded UE information from the invaded cell BS and the types of invaded UE information to be reported may be transmitted through transmission of a resource status request message from the invading cell BS to the invaded cell BS.

In step 402, the reporting manner of the invaded UE information and the types of invaded UE information to be reported are received by the invaded cell BS, and it is determined whether the reporting manner of the invaded UE information and the types of invaded UE information to be reported as received are proper based on current interference. If they are proper, a resource status response message is replied to the invading cell BS; otherwise, a resource status failure message is replied to the invading cell BS.

In an embodiment, the resource status failure message is carried therein with a failure reason and time to wait, such that the invading cell BS can determine whether to resend the resource status request according to the failure reason and, for example, resend the resource status request when the time to wait passes by.

The reporting manner of the invaded UE information described above may include at least a reporting period or a reporting condition. In other words, the invaded UE information may be reported by the invaded cell BS according to the reporting period or reported when the reporting condition is satisfied. The reporting condition may be indicative when the number of invaded UEs reaches a preset threshold or when a number variation of invaded UES reaches another preset threshold.

The determination of whether the reporting manner of the invaded UE information and the types of invaded UE information to be reported as carried are proper based on current interference may be performed in a following manner. The reporting period and the reporting condition may be determined depending on the current interference such that, when the current interference is small with little change, the reporting period may be longer and the threshold of the reporting condition may be higher as frequent adjustment of resource is not required; and when the current interference is large with frequent change, the reporting period may be shorter and the threshold of the reporting condition may be lower.

The types of invaded UE information to be reported may include a measurement identifier, report characteristics (RC), a measured cell identity and the like. The RC may be carried with the number of invaded UEs which can be indicated by the sixth byte of the RC. The measurement identifier may be indicative of a task identifier of a current measurement. The measured cell identity may be indicative of a target identity of the current measurement, that is, which measured cell(s) are required to report specified content according to the current measurement.

Fig. 5 is a flow chart illustrating a decision process of an invading cell BS for reallocating physical resource. The process of determining whether the reallocation of physical resource is required in step 203 of the first embodiment, as shown, includes following steps.

In step 501, the number of UEs accommodated by current physical resource allocated for invaded UEs is calculated. In an embodiment, the number of UEs accommodated by physical resource equals to the product of an amount of physical resource and the number of UEs accommodated by unit physical resource.

In step 502, it is determined the reallocation of physical resource is required when the number of invaded UEs meets any one of following conditions:
(1) the number of invaded UE reaches a preset percentage of the number of UEs accommodated by current physical resource allocated for invaded UEs;
(2) the number of invaded UE equals to the number of UEs accommodated by current physical resource allocated for invaded UEs; and
(3) the number of invaded UE exceeds the number of UE accommodated by current physical resource allocated for invaded UEs.

Otherwise, it is determined the reallocation of physical resource is not required and the process ends.

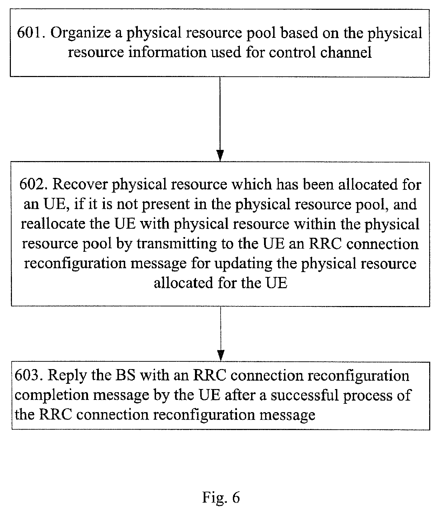

Fig. 6 is a flow chart illustrating organization and allocation of physical resource in an invading cell BS or an invaded cell BS. As can be seen, the process of organization and allocation on physical resource performed by the invading cell BS or the invaded cell BS includes following steps.

In step 601, a physical resource pool is organized by the invading cell BS and the invaded cell BS, respectively, based on the physical resource information used for control channel, for convenience of allocation and release of physical resource.

Organization of physical resource pool may be performed by determining physical resource of control channel for the invaded UEs, which part of physical resource is utilized by the invaded UEs, based on the physical resource information and, then, excluding the physical resource of control channel for the invaded UEs from preset total physical resource of control channel, which remaining part of physical resource is utilized by non-invaded UEs.

In step 602, all of UEs accessed in the current cell BS are traversed, physical resource of control channel which has been allocated for an UE, if it is not present in the physical resource pool, is recovered. The UE is then reallocated with physical resource within the physical resource pool by transmitting to the UE an RRC (radio resource control) connection reconfiguration message for updating the physical resource allocated for the UE.

In step 603, an RRC connection reconfiguration completion message is replied to the BS by the UE after a successful process of the RRC connection reconfiguration message.

It should be noted that physical resource of control channel may be directly allocated from the physical resource pool for those newly accessed UEs.

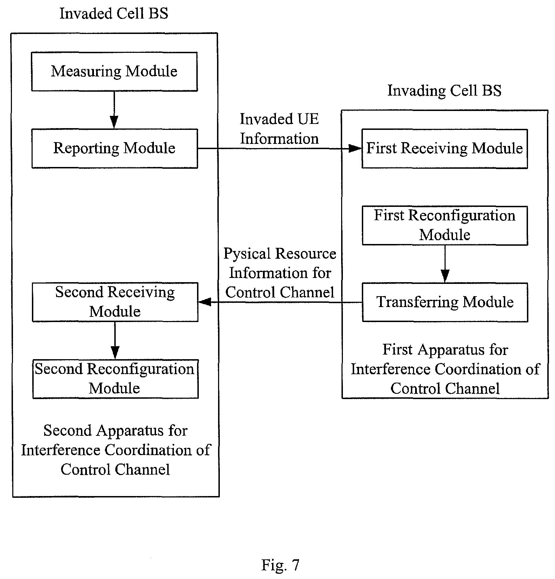

Fig. 7 is a block diagram illustrating a system for interference coordination of control channel according to an embodiment of the disclosure. They system as shown includes an invaded cell base station BS and an invading cell BS. The invaded cell BS is configured to measure invaded UE information, report the invaded UE information to the invading cell BS, receive physical resource information used for control channel transferred by the invading cell BS, and allocate physical resource based on the physical resource information. The invading cell BS is configured to receive the invaded UE information reported by the invaded cell BS, determine the physical resource information used for control channel according to the received invaded UE information, organize and allocate physical resource based on the physical resource information, and transfer the physical resource information to the invaded cell BS.

The invading cell BS may be further configured to determine whether a reallocation of physical resource is required based on the received invaded UE information.

Fig. 7 also illustrates an apparatus for interference coordination of control channel according to an embodiment of the disclosure.

A first apparatus for interference coordination of control channel includes: a first receiving module configured to receive invaded UE information; a first reconfiguration module configured to determine physical resource information used for control channel, and organize and allocate physical resource based on the physical resource information; and a transferring module configured to transfer the physical resource information.

In an embodiment, the apparatus further includes a determining module configured to determine whether a reallocation of physical resource is required based on the received invaded UE information.

It should be noted that, the first receiving module and the transferring module may be implemented with communication chips in the first apparatus for interference coordination of control channel, while the first reconfiguration module and the determining module may be implemented with CPU (Central Processing Unit), MPU (Micro Processing Unit), DSP (Digital Signal Processor), FPGA (Field Programmable Gate Array) or the like in the first apparatus for interference coordination of control channel.

A second apparatus for interference coordination of control channel includes: a measuring module configured to measure invaded UE information; a reporting module configured to report the invaded UE information; a second receiving module configured to receive physical resource information used for control channel; and a second reconfiguration module configured to organize and allocate physical resource based on the physical resource information.

In an embodiment, the second receiving module is further configured to receive a reporting manner of the invaded UE information and types of the invaded UE information to be reported; and the apparatus further includes a determining module configured to determine whether the reporting manner of the invaded UE information and the types of the invaded UE information to be reported as received are proper based on current interference, if yes, reply the invading cell BS with a resource status response message and, if no, reply the invading cell BS with a resource status failure message.

It should be noted that, the reporting module and the second receiving module may be implemented with communication chips in the second apparatus for interference coordination of control channel, while the measuring module, the second reconfiguration module and the determining module may be implemented with CPU, MPU, DSP, FPGA or the like in the second apparatus for interference coordination of control channel.

There is also provided a computer readable storage medium by an embodiment of the disclosure, which includes a set of computer executable instructions configured to perform the method for interference coordination of control channel at a side of the invaded cell BS according to embodiments of the disclosure.

There is also provided a computer readable storage medium by an embodiment of the disclosure, which includes a set of computer executable instructions configured to perform the method for interference coordination of control channel at a side of the invading cell BS according to embodiments of the disclosure.

Described above are only embodiments of the disclosure, but not intended to limit protection scope of the invention.

## Claims

1. A method for interference coordination of control channel, **characterized in** comprising:
receiving invaded user equipment UE information;
determining physical resource information used for control channel according to the invaded UE information;
organizing and allocating physical resource based on the physical resource information; and
transferring the physical resource information.

2. The method as claimed in claim 1, **characterized in** further comprising:
transmitting a reporting manner of the invaded UE information and types of the invaded UE information to be reported.

3. The method as claimed in claim 1, **characterized in that**, the determining physical resource information used for control channel according to the invaded UE information comprises:
determining the physical resource information used for control channel according to the invaded UE information when deciding a reallocation of physical resource is required.

4. The method as claimed in claim 3, **characterized in that** the deciding a reallocation of physical resource is required comprises:
obtaining a number of UE accommodated by current physical resource allocated for invaded UEs through a calculation based on an amount of physical resource allocated for invaded UEs and a number of UE accommodated by unit physical resource;
deciding the reallocation of physical resource is required when a number of invaded UE meets any one condition selected from a group comprising:
the number of invaded UE reaches a preset percentage of the number of UE accommodated by current physical resource allocated for invaded UEs;
the number of invaded UE equals to the number of UE accommodated by current physical resource allocated for invaded UEs; and
the number of invaded UE exceeds the number of UE accommodated by current physical resource allocated for invaded UEs.

5. The method as claimed in claim 2, **characterized in that** the transmitting a reporting manner of the invaded UE information and types of the invaded UE information to be reported is performed by transmitting a resource status request message.

6. The method as claimed in claim 1, **characterized in that** the physical resource information used for control channel comprises an initial position of resource blocks and a number of the resource blocks.

7. The method as claimed in claim 1, **characterized in that** the physical resource information used for control channel is transferred by transmitting a load information message.

8. The method as claimed in any one of claims 1-7, **characterized in that** the organizing and allocating physical resource based on the physical resource information comprises:
organizing a physical resource pool based on the physical resource information; and
recovering allocated physical resource, when the allocated physical resource is not present in the physical resource pool, and reallocating the physical resource according to the physical resource pool.

9. A method for interference coordination of control channel, **characterized in** comprising:
measuring and reporting invaded user equipment UE information;
receiving physical resource information used for control channel; and
organizing and allocating physical resource based on the physical resource information.

10. The method as claimed in claim 9, **characterized in** further comprising:
receiving a reporting manner of the invaded UE information and types of the invaded UE information to be reported;
determining whether the reporting manner of the invaded UE information and the types of the invaded UE information to be reported are proper based on current interference, if yes,
replying with a resource status response message and, if no,
replying with a resource status failure message.

11. The method as claimed in claim 9 or 10, **characterized in that** the organizing and allocating physical resource based on the physical resource information comprises:
organizing a physical resource pool based on the physical resource information; and
recovering allocated physical resource, when the allocated physical resource is not present in the physical resource pool, and reallocating the physical resource according to the physical resource pool.

12. A method for interference coordination of control channel, **characterized in** comprising:
measuring, by an invaded cell base station BS, invaded user equipment UE information and reporting the invaded UE information to an invading cell BS;
determining, by the invading cell BS, physical resource information used for control channel according to the invaded UE information, and transferring the physical resource information to the invaded cell BS; and
organizing and allocating, by the invading cell BS and the invaded cell BS, respectively, physical resource based on the physical resource information.

13. The method as claimed in claim 12, **characterized in** further comprising:
determining a reporting manner of the invaded UE information and types of the invaded UE information to be reported through a negotiation between the invading cell BS and the invaded cell BS.

14. A system for interference coordination of control channel, **characterized in** comprising an invaded cell base station BS and an invading cell BS;
the invaded cell BS is configured to measure invaded user equipment UE information, report the invaded UE information to the invading cell BS, receive physical resource information used for control channel transferred by the invading cell BS, and organize and allocate physical resource based on the physical resource information;
the invading cell BS is configured to receive the invaded UE information reported by the invaded cell BS, determine the physical resource information used for control channel according to the received invaded UE information, organize and allocate physical resource based on the physical resource information, and transfer the physical resource information to the invaded cell BS.

15. The system as claimed in claim 14, **characterized in that**, the invading cell BS is further configured to determine whether a reallocation of physical resource is required based on the received invaded UE information.

16. An apparatus for interference coordination of control channel, **characterized in** comprising:
a receiving module configured to receive invaded user equipment UE information;
a reconfiguration module configured to determine physical resource information used for control channel, and organize and allocate physical resource based on the physical resource information; and
a transferring module configured to transfer the physical resource information.

17. The apparatus as claimed in claim 16, **characterized in** further comprising a determining module configured to determine whether a reallocation of physical resource is required based on the received invaded UE information.

18. An apparatus for interference coordination of control channel, **characterized in** comprising:
a measuring module configured to measure invaded user equipment UE information;
a reporting module configured to report the invaded UE information;
a receiving module configured to receive physical resource information used for control channel; and
a reconfiguration module configured to organize and allocate physical resource based on the physical resource information.

19. The apparatus as claimed in claim 18, **characterized in that** the receiving module is further configured to receive a reporting manner of the invaded UE information and types of the invaded UE information to be reported; and
the apparatus further comprises a determining module configured to determine whether the reporting manner of the invaded UE information and the types of the invaded UE information to be reported received by the receive module are proper, if yes, reply with a resource status response message and, if no, reply with a resource status failure message.

20. A base station, **characterized in** comprising the apparatus for interference coordination of control channel as claimed in claim 16 and/or 18.

21. A computer readable storage medium, **characterized in** comprising a set of computer executable instructions configured to perform the method for interference coordination of control channel as claimed in any one of claims 1-8.

22. A computer readable storage medium, **characterized in** comprising a set of computer executable instructions configured to perform the method for interference coordination of control channel as claimed in any one of claims 9-11.
